# EUROPEAN PATENT SPECIFICATION

(11) **EP 0 604 217 B1**
(45) Date of publication and mention of the grant of the patent: **03.09.1997**
(21) Application number: 93310426.7
(22) Date of filing: 22.12.1993
(51) Int. Cl.: B65G 67/60, B65G 63/00

(54) **Transfer apparatus for loading and unloading cargo into or from a ship**
Frachtüberführungsvorrichtung zum Be- und Entladen von Schiffen
Appareil pour transférer des marchandises pour charger et décharger des navires

(30) Priority: 25.12.1992 JP 359357/92; 24.09.1993 JP 237765/93
(43) Date of publication of application: 29.06.1994
(73) Proprietor: KAWASAKI STEEL CORPORATION, Chuo-Ku, Kobe-Shi Hyogo-Ken (JP)
(72) Inventor: Nanba, Shinji, c/o Mizushima Works, Kawasaki Steel, Kurashiki-shi, Okayama 712 (JP); Nakanishi, Teruyuki, c/o Kawasaki Steel Corp., Chiyoda-ku, Tokyo 100 (JP); Doi, Yoshikiyo, c/o Kawasaki Steel Corp., Chiyoda-ku, Tokyo 100 (JP); Toriya, Norio, c/o Mizushima Branch, Kawatetsu, Mizushima, Kurashiki-shi, Okayama 712 (JP); Andou, Kenji, c/o SEFCO Corp., Chiba-shi, Chiba 260 (JP); Odagiri, Kazuya, c/o SEFCO Corp., Chiba-shi, Chiba 260 (JP)
(74) Representative: Overbury, Richard Douglas

(56) References cited:
- EP-A- 0 320 068

## Description

The present invention relates to a cargo transfer apparatus for loading and unloading heavy pieces of cargo of comparatively uniform size, such as coils of steel sheets, onto and from a cargo ship.

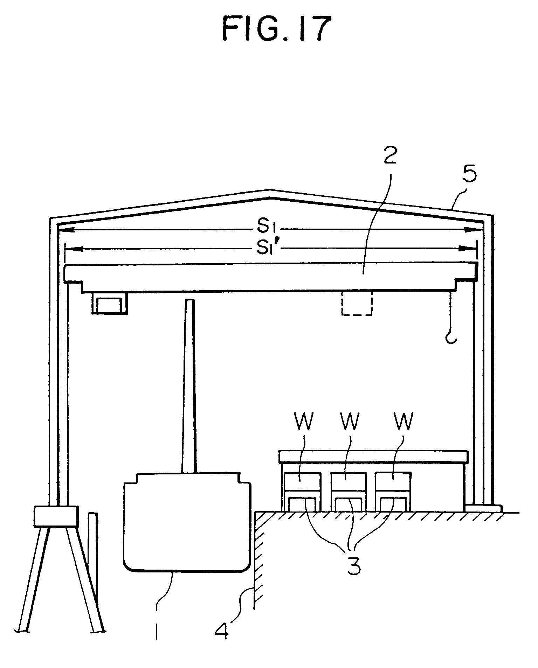

Conventionally, loading/unloading of heavy cargo such as pieces of coiled steel sheets is conducted by using, for example, an overhead crane. Fig. 17 illustrates an example of such a cargo loading/unloading system. Coils W placed on shore skids 3 are loaded onto a ship 1 moored alongside a quay or wharf 4.

This conventional ship cargo loading/unloading method suffers from the following problems:
(1) When loading the pieces of cargo W, a series of operations including lifting and carrying of the cargo from the wharf 4 to the loading position in the ship 1 is performed by the same crane 2, which prolongs the cycle time of the loading operation, resulting in a lowered efficiency of the cargo handling work.
(2) The heights of the wharf crane and the overhead crane 2 must be high enough to enable the lifted cargo to clear the masts of the ship 1, which undesirably requires that the cargo is hoisted a long vertical distance. This presents the danger of swinging or oscillation of the lifted cargo and increases loss time of the cargo handling work.
(3) In the case where the cargo is handled at an all-weather berth in which the loading/unloading is conducted in a dock hall or shed, the cargo is usually handled by an overhead crane 2. The overhead crane 2 must have a height large enough to enable the hoisted cargo to clear the mast of the ship 1. This requires that the hall also has a height large enough to accommodate such a crane, requiring a huge cost for installation and equipment of the whole loading/unloading system.

In order to overcome these problems, improved coil loading/unloading systems are proposed in Japanese Patent Laid-Open Nos. 3-138223 and 3-227830. Each of the proposed systems employs a shore cargo shifting apparatus located at a cargo loading station, and a plurality of girders which are disposed above the ship at a spacing from each other in the breadthwise direction of the ship so as to extend in the longitudinal direction of the ship. The system disclosed in Japanese Patent Laid-Open No. 3-138223 will be described by way of example.

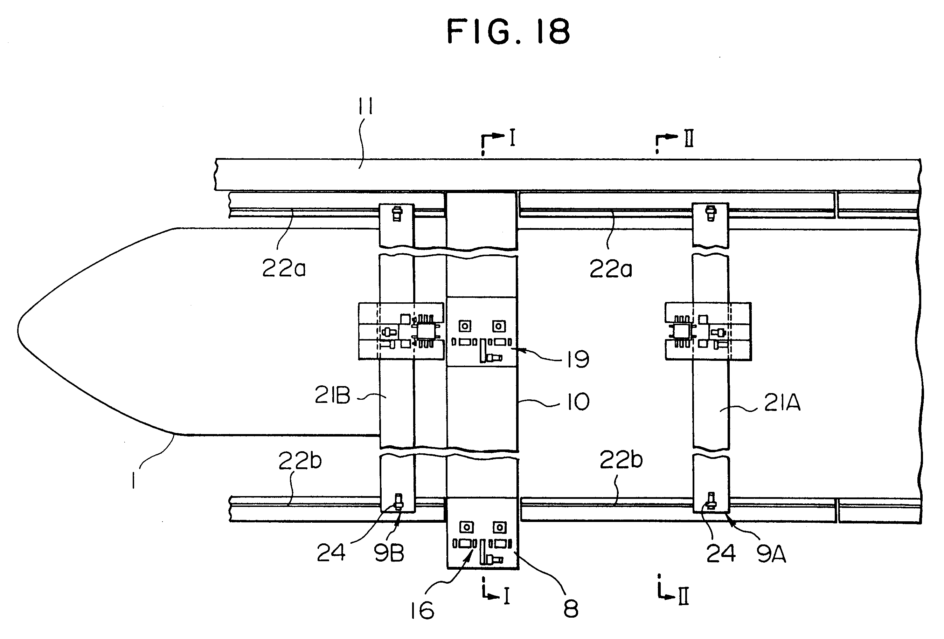

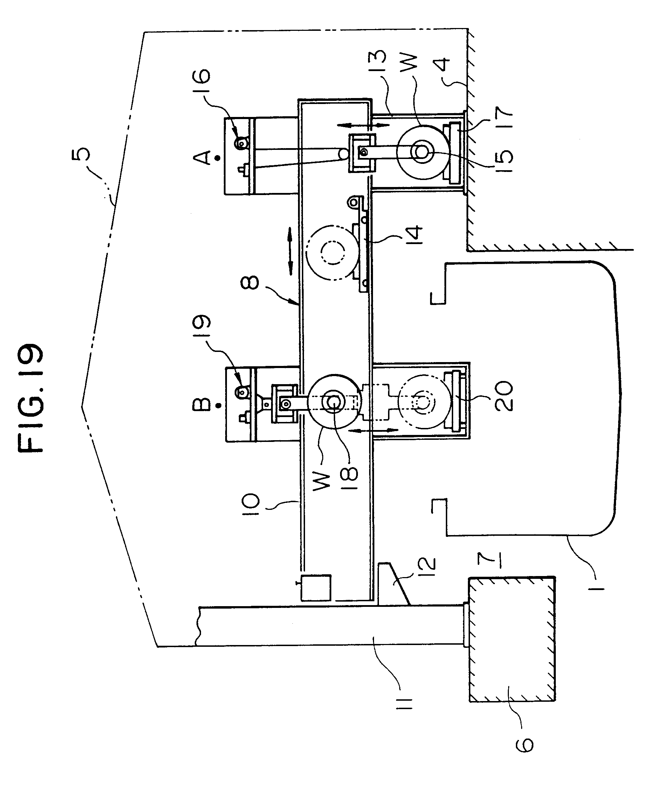

As shown in Figs. 18 to 20, a berth approach 7 is formed between a wharf 4 and a base 6 to enable a ship 1 to approach and be moored alongside a wharf 4. An all-weather berth hall 5, having a length large enough to cover the entire length of the ship 1, is built to bridge the space between the wharf 4 and the base 6. The berth hall 5 has a height large enough to clear the masts of the ship 1.

A cargo hand-over apparatus generally denoted by 8 for taking up and delivering pieces of cargo such as coils W is provided at a suitable location so as to extend between the wharf 4 and the base 6. On-board loading/unloading apparatuses 9A, 9B, for loading and unloading the cargo into and from the ship 1 are disposed at the front (bow) side and at the rear (stern) side of the cargo hand-over apparatus 8.

The cargo hand-over apparatus 8 has a girder 10 which extends in the breadthwise direction of the ship 1. The girder 10 is demountably supported at its one end by a bracket 12 on a pillar 11 on the base 6 and at its other end by a pillar 13 on the wharf 4.

The girder 10 is disposed at a level which is lower than the level of the tops of the masts but is high enough to clear the hatch tops of the ship 1.

A self-propelled truck 14 is adapted to run back and forth along the girder 10 between a wharf-side stand-by position A and a ship-side stand-by position B on the girder 10.

A wire-type shore-side hoist 16, having a carrying device 15 engageable with the central bore of the coil W, is disposed at the stand-by position A.

For the purpose of loading the ship with coils W as the cargo, the hoist 16 lifts a coil W off a shore truck 17 which has been moved to the stand-by position A and transfers the coil W to the empty self-propelled truck 14 which also has run to the stand-by position A. Conversely, in the unloading mode, the hoist 16 lifts a coil W off the self-propelled truck 14 which has moved to the stand-by position A and delivers the same to the shore truck 17 which has been moved to the stand-by position A and which is now empty.

A wire-type ship-side hoist 19, having a carrying device 18 engageable with the central bore of the coil W, is disposed at the stand-by position B of the girder 10.

During loading of the cargo, the hoist 19 lifts a coil W off the self-propelled truck 14 which has run to the stand-by position B and lowers the coil W to deliver it to a ship-side shifter 20 which has been stationed at the stand-by position B, whereas, in the unloading operation, the hoist 19 lifts a coil W off the ship-side shifter 20 which has moved to the stand-by position B and lowers the coil W to deliver it to the self-propelled truck 14 which is now empty and which has moved to the stand-by position B.

The on-board loading/unloading apparatuses 9A, 9B have travelling beams 21A, 21B which extend in the breadthwise direction of the ship 1. These beams 21A, 21B are supported at their respective ends by a rail 22a laid on pillars 11 on the base 6 and a rail 22b laid on pillars 33 on the wharf 4, so that these means are capable of travelling in the longitudinal direction of the ship.

These travelling beams 21A, 21B are demountable from the rails 22a and 22b.

As in the case of the girder 10, the travelling beams 21A, 21B are disposed at a level which is lower than that of the mast tops but high enough to clear the hatch tops of the ship 1.

Each of the rails 22a, 22b is divided into two segments: namely, a front segment which is on the front side of the girder 10 and a rear segment which is on the rear side of the girder 10. The rear rail segments 22a, 22b support the travelling beam 21A, while the front rail segments 22a, 22b support the travelling beam 21B.

Thus, the on-board loading/unloading apparatuses 9A and 9B are disposed on the front side and the rear side of the hand-over apparatus 8, so as to enable loading of the coils W in any location on the bow-side and stern-side of the transfer space, as well as unloading from any of these locations, thus improving the efficiency of the cargo loading/unloading operations. The described arrangement, however, is only illustrative and the loading/unloading system sometimes has only one on-board loading/unloading apparatus, e.g., the on-board loading/unloading apparatus 9A which is on the stern-side of the hand-over apparatus 8.

Since both on-board loading/unloading apparatuses 9A and 9B have an identical construction, only the stern- or rear-side on-board loading/unloading apparatus 9A will be described by way of example.

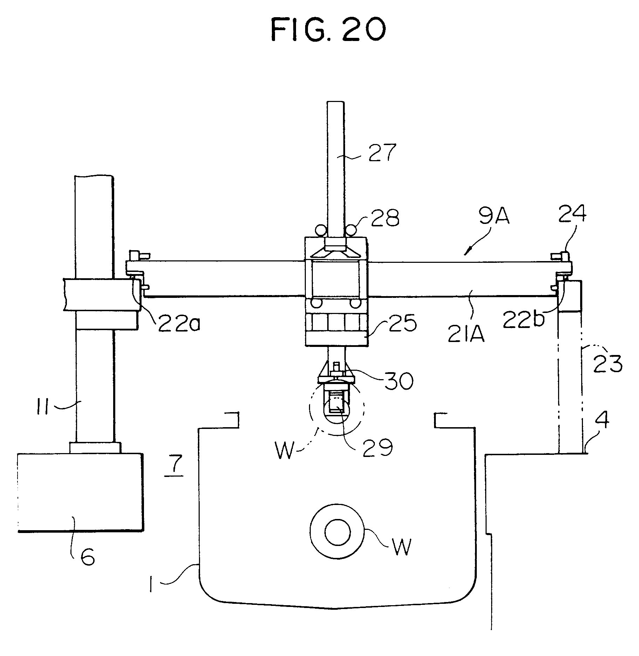

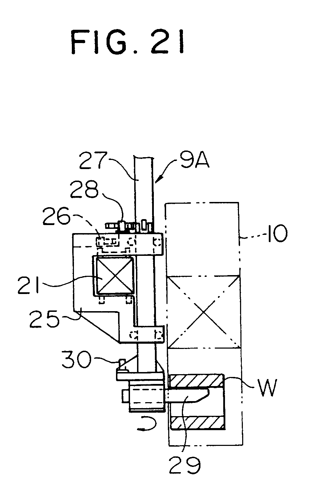

Referring to Figs. 20 and 21, a tram mechanism 24 including a motor is provided on the travelling beam 21A. The travelling beam 21A also carries a traverse beam 25 which traverses along the travelling beam 21A. The traverse beam 25 carries a traverse mechanism 26 including a motor.

The traverse beam 25 has a liftable rod 27 which is movable up and down. A lifting mechanism 28 including a motor is provided on the liftable rod 27.

A carrying device 29 engageable with the central bore of the coil W is rotatably provided on the lower end of the liftable rod 27, and a swivel mechanism 30 including a motor is carried by the liftable rod 27.

The carrying device 29 is made to travel, traverse, be lifted/lowered and rotate, by the operations of the mechanisms 24, 26, 28 and 30, so as to move the coil W between the stand-by position and the stowage position in the ship's hold.

The carrying device 29 may be of fork-type so that it can deliver a coil W to the on-board shifter 20 on the stand-by position B and lift the same from the shifter 20 stationed at the position B. In the case where the carrying device 29 is of tongue-type, the on-board shifter 20 is shifted to a suitable position which is determined as the stand-by position.

The cargo loading/unloading operation of the above system will now be described. After the ship 1 is moored, the girder 10 of the hand-over apparatus 8 is moved from a suitable storage location on the wharf 4 and is lifted by, for example, a shore crane so as to be seated on the bracket 12 on a pillar 11 on the base 6 and a pillar 13 on the wharf 4. Then, the travelling beam 21A of the on-board loading/unloading apparatus 9A also is lifted and mounted on the rails 22a, 22b.

Then, the shore truck 17 carrying a coil or coils W is moved to the stand-by position A, and the coil W is lifted by a hoist 16 of the hand-over apparatus 8. The coil W is then lowered and delivered to the empty self-propelled truck 14 which has moved to and is stationed at the position A.

The truck 14 carrying the coil W then runs to the stand-by position B, where the coil W is lifted by a hoist 19 and is lowered and delivered to the empty shifter 20 which has been shifted to and stationed at the stand-by position B.

Then, the travelling beam 21A, traverse beam 25, liftable rod 27 and the carrying device 29 are activated by the operations of the respective mechanisms 24, 26, 28 and 30 so as to travel, traverse, move up and down and rotate, so as to bring the carrying device 29 into engagement with the central bore of the coil W and then to move the same to a stowage position in the ship's hold. After placing the coil W at the stowage position, the carrying device 29 is lowered so as to be disengaged from the bore of the coil W, thus completing one cycle of the operation for loading the ship with the coil W.

This cycle is repeated so that consecutive coils are loaded one after another.

After completion of the loading operation, the girder 10 of the hand-over apparatus 8 and the travelling beam 21A of the on-board loading/unloading apparatus 9A are dismounted and placed at the predetermined location on the wharf 4.

The handling of the coil W by the hand-over apparatus 8 can be completed in a comparatively short time, whereas the handling of the coil W by the on-board loading/unloading apparatus 9A requires a considerably long time because the stowage position varies over a wide cargo area on the ship and because time-consuming work is necessary for stacking the coils W. It is therefore desirable to employ a pair of on-board loading/unloading apparatuses 9A, 9B as in the present invention, so that loss of time in the operation of the hand-over apparatus is reduced to half.

Unloading of the cargo coils W can be conducted by following the described process in reverse order. Namely, an operation is conducted cyclically in which the coil W is conveyed to the stand-by position B by the operation of the on-board loading/unloading apparatus 9A and is transferred to the shore truck 17 by the operation of the cargo hand-over apparatus 8. Coils W are unloaded from the ship as a result of repetition of the described cycle.

As in the case of the loading operation, the operational loss time of the cargo hand-over apparatus 8 can be reduced to half when a pair of on-board loading/unloading apparatuses 9A and 9B are used.

Thus, in the described arrangement, the cargo hand-over apparatus 8 and the on-board loading/unloading apparatuses 9A,9B cooperate with each other such that the transfer of the cargo from the wharf and the stowage of the cargo in the ship are conducted simultaneously, whereas, in the unloading operation, the take-up of the cargo from the stowage position and the transfer of the cargo to the wharf are executed concurrently, whereby the cycle time of the cargo loading and unloading operation is greatly reduced, thus improving the efficiency of the cargo loading/unloading operations.

The apparatuses 8, 9A and 9B may be arranged side-by-side at a level at which they can clear the hatch tops of the ship 1. Namely, it is not necessary that the apparatuses 8, 9A and 9B have heights large enough to clear the mast tops of the ship 1. Consequently, the cargo coil W need not be lifted a large vertical distance, thereby reducing the tendency to swing and thus contributing to an improvement in safety and a reduction in the loss time.

Furthermore, since the apparatuses 8, 9A and 9B need not have large heights, the all weather berth hall 5 also can have a small height, which contributes to reduction in the installation or building cost.

The described arrangement, however, encounters the following problems. Namely, since the cargo is conveyed between the shore truck 17 and the hoist 16 of the cargo hand-over apparatus 8, it is necessary that the shore truck 17 is stopped and stationed precisely at the shore-side stand-by position A.

A control function for stopping the truck 17 precisely at the stand-by position, as well as an operation specifically for the position control of the truck 17 are thus essential.

Another problem is attributed to the fact that only one shore truck 17 can be stationed in the stand-by position A at a time. Although a plurality of trucks 17 are moved to the stand-by position consecutively, each truck 17 cannot be moved into the stand-by position A until the loading or unloading operation is finished for the preceding truck 17. Consequently, the efficiency of the cargo handling work is reduced. In addition, the use of a multiplicity of trucks 17 raises the installation cost and exacerbates problems with maintenance work.

Furthermore, since a plurality of shore trucks 17 are successively moved to the single stand-by position A, it is necessary that two pathways are provided, one exclusively for the trucks approaching the stand-by position A and one for the trucks moving away from the stand-by position A. Provision of a pair of pathways is undesirable because the limited area on the wharf is occupied by such pathways.

The operation for hoisting the cargo up or down is more time-consuming than traversing of the hoist. The hoist or crane 16 of the cargo hand-over apparatus 8 has to hoist the cargo coil W from the wharf up to a level high enough to clear the hatch top, as in the conventional systems. Consequently, the cycle time of this crane is not substantially shortened.

Furthermore, the girder 10 and the beams 21A, 21B, must be arranged at such levels that they are able to clear the hatch tops but do not clear the mast tops of the ship. The girder and the beams, therefore, must be dismounted and removed before the ship leaves the wharf. Problematic and time-consuming works are thus required for installing and dismantling the girder and the beams. In addition, specific equipment is required for handling the girder and the beams which are heavy and large in size.

EPO 0320068 describes a general cargo crane which has an endless chain and seeks to address the problem of introducing general cargo onto a continuously operating conveyor smoothly and with the minimum of manpower. The solution to this problem resides in the use of a cage type frame which includes a deposit platform and a lifting means to raise cargo which has been deposited on the platform to the level of the conveyor. However, this type of cargo transfer is unsuitable for particularly heavy cargo, and further suffers the disadvantage that the long lengths of endless chain required may loosen or vibrate thereby damaging the cargo in certain circumstances.

It is therefore an object of the present invention to provide a cargo transfer apparatus in which a buffer function is incorporated between the shore trucks and the cargo loading/unloading apparatus, in order to ensure that the delivery of the cargo to and from the loading/unloading apparatus can be conducted under as constant a condition as possible and to minimize the waiting time of the shore trucks, thereby overcoming the above-described problems of the known art.

According to the present invention, there is provided a cargo transfer apparatus for loading and unloading cargo into or from a ship, wherein the apparatus comprises a main portion, adapted to be disposed on a wharf-side, having a forward portion integral with the main portion and including at the leading end thereof a cargo holding stage adapted to be disposed in, or in proximity to, the ships hold, a cargo receiving station adapted to receive cargo from at least one conveyor apparatus and a self propelled shifting means operable to shift cargo from the cargo receiving station to the cargo holding stage, wherein the shifting means comprises a truck adapted to run on the main frame which truck includes a lifting apparatus and a carrying apparatus operable to lift and lower the cargo and to carry the same during transfer between the cargo receiving station and the cargo holding stage.

In an embodiment of the present invention, the cargo receiving station comprises an inner skid which skid is disposed in the main portion, is open at its respective lateral sides and has a gate-like construction thereby to receive cargo directly from conveyor apparatus disposed at either or both of said sides. In this way, the efficiency of transfer of cargo to the apparatus is improved.

A further embodiment of the invention provides that the forward portion of the main portion includes height adjustment means operable to adjust the height of the cargo holding stage. Thus, the cargo holding stage can be disposed in a desired position in or near the hold.

Desirably, the height adjustment means includes slide guides disposed on the leading end of the forward portion of the main portion, a liftable support frame vertically movably retained on the slide guides and adapted to allow passage therethrough of the cargo and the lifting apparatus and carrying apparatus of the truck and means for retaining the frame in a desired position on the slide guides. The cargo holding stage is preferably retained in cantilevered manner on a lower part of the support frame.

For a better understanding of the invention and to show how the sam may be carried into effect, reference will be made to the following drawings, in which:
Fig. 1 is a side elevational view of an embodiment of the cargo transfer apparatus in accordance with the present invention;
Fig. 2 is a plan view of the embodiment shown in Fig. 1;
Fig. 3 is a front elevational view of an embodiment shown in Fig. 1;
Fig. 4 is a side elevational view of the embodiment built up on an all-weather berth;
Fig. 5 is a plan view of a critical portion of the embodiment shown in Fig. 1;
Fig. 6 is an illustration of the cargo transfer apparatus embodying the present invention in an operating condition;
Fig. 7 is an illustration of the cargo transfer apparatus embodying the present invention in a waiting condition;
Fig. 8 is a side elevational view of an example of a carrier truck employed in the embodiment of the present invention;
Fig. 9 is a plan view of the carrier truck shown in Fig. 8;
Fig. 10 is a side elevational view of a sub-truck carried by the carrier truck shown in Fig. 8;
Fig. 11 is a plan view of an all-weather berth which incorporates the cargo transfer apparatus of the present invention and which is combined with a shore warehouse;
Fig. 12 is a side elevational view of a skid incorporated in the cargo transfer apparatus in accordance with the present invention;
Fig. 13 is a plan view of the skid shown in Fig. 12;
Fig. 14 is a front elevational view of the skid shown in Fig. 12;
Fig. 15 is a plan view of the cargo transfer apparatus of the invention used for handling coils of steel sheets;
Fig. 16 is a side elevational view of the cargo transfer apparatus of the invention used for handling coils of steel sheets;
Fig. 17 is a side elevational view of a known cargo handling system;
Fig. 18 is a plan view of the known cargo handling system;
Fig. 19 is a sectional view taken along he line I-I of Fig. 18;
Fig. 20 is a sectional view taken along the line II-II of Fig. 18; and
Fig. 21 is a side elevational view of a loading/unloading apparatus used in the known cargo handling system.

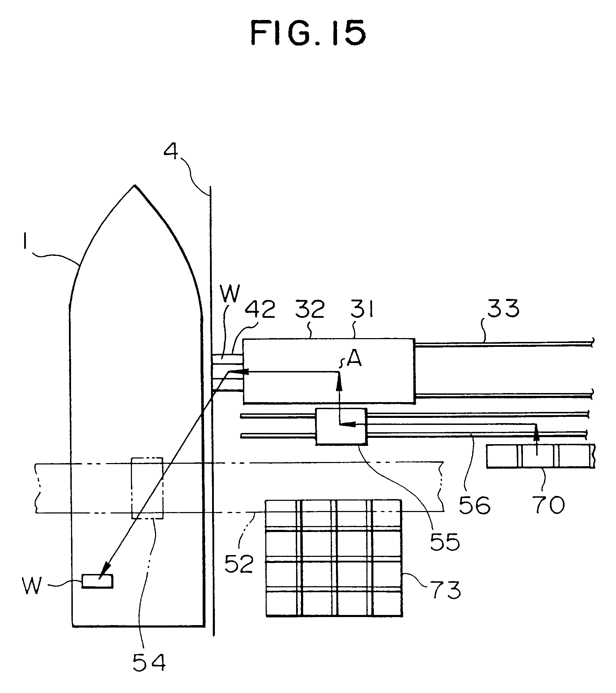

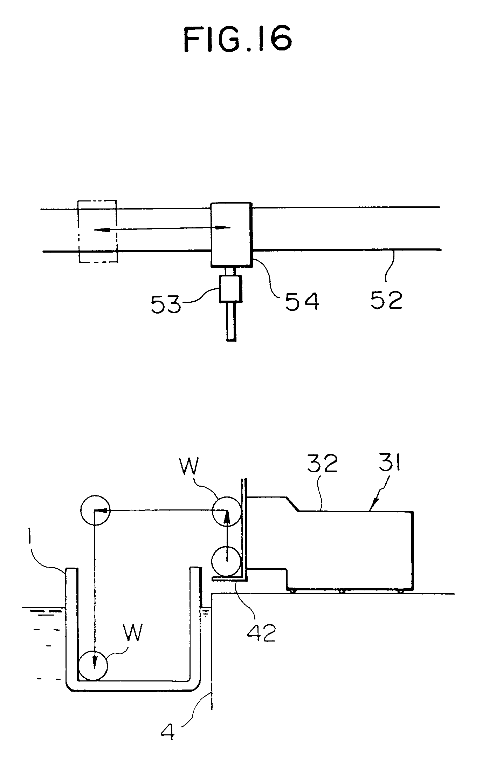

The operation of the apparatus of the present invention will be described with reference to Figs. 15 and 16.

For the purpose of loading or unloading cargo into or from a ship 1 which has been moored, the cargo transfer apparatus 31 is moved to a position where the cargo holding stage 42 is positioned in a region above and near the ship's hold.

When the cargo transfer apparatus 31 is arranged to move in the direction perpendicular to the wharf 4, the position of the whole apparatus can be freely adjusted with respect to the hull of the ship 1 in accordance with the conditions such as the tide and the ship's trim, thereby enhancing safety in cargo loading/unloading work.

The cargo holding or hand-over stage 42 of the cargo transfer apparatus 31 itself does not move when in use, but merely holds the cargo temporarily. Therefore, the cargo transfer apparatus 31 can easily be designed such that the cargo holding stage 42 is positioned close to the ship. Thus, the hand-over stage 42 can be positioned sufficiently close to the ship to ensure easy hand-over of the cargo from and to the shore crane 52. In particular, the work for the shore crane 52 for hoisting the cargo up and down is greatly reduced when the cargo holding stage 42 is positioned within the hold.

Installation of the cargo transfer apparatus 31 at a fixed point on the wharf 4 allows the cargo holding stage 42 to be located at a fixed location on the wharf 4. Position information indicative of the position of the hand-over stage 42 in the longitudinal, breadthwise and heightwise directions is entered beforehand into to a control section for controlling the operation of the shore crane 52.

The shore crane 52, when the cargo has been lifted to a level high enough to safely clear the hatch top of the ship 1, automatically returns to the position directly above the holding stage 42 in accordance with the above-mentioned position information so as to be stationed at this position and then automatically performs transfer of the cargo between itself and the holding stage 42 in accordance with the position information.

Recognition of the stowage position in the ship and depositing the cargo in the stowage position can not yet be successfully conducted automatically. Therefore, the movement of the shore crane 52 from the position directly above the holding stage 42 to the position above the stowage position and the delivery of the shore crane 52 and the ship 1 are conducted under manual controls.

Transfer of the cargo between the shore-side stand-by position A and the holding stage 42 is conducted under this condition, by the operation of the shifter 45 which is self-propelled along the main frame 32.

Delivery of the cargo between the holding stage 42 and the ship 1 is performed by a cargo handling apparatus such as the shore crane 52, independently from the above-mentioned delivery of the cargo between the stand-by position A and the cargo holding stage 42.

Therefore, each shore truck 55 can be engaged in the cargo transfer conveying operation immediately after completion of the delivery of the cargo at the stand-by position A, without being limited by the operation of cargo transfer between the holding stage 42 and the ship 1.

Similarly, the delivery of the cargo between the holding stage 42 and the ship 1 can be conducted by a cargo handling apparatus such as the shore crane 52 without being restricted by the cargo handling work of the shore trucks 55.

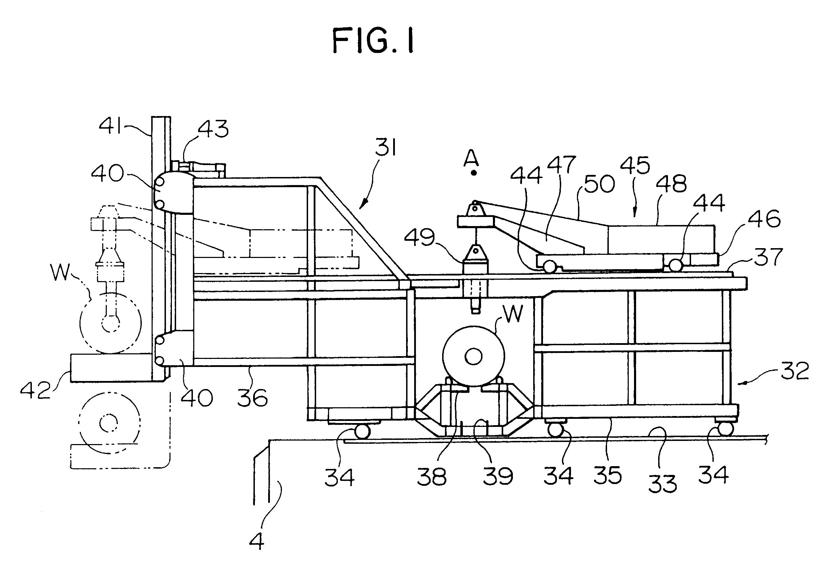

Referring now to Fig. 1, when a cargo receiving station 38 such as an inner skid 38 is provided inside the main frame of the cargo transfer apparatus 31, the aforesaid stand-by position A is represented by this cargo receiving station 38. In this case, the stand-by position A and the holding stage 42 are fixed relative to each other, so that the shifting of the cargo coils between the stand-by position A and the holding stage 42 can be smaothly, easily and precisely performed by the shifter 45.

When the shifter 45 has a lifting apparatus 47 provided on the front end of the truck body 46, shifting of the cargo coils between the stand-by position A and the cargo holding stage 42 can be performed solely by the cargo lifting/lowering operation conducted by the lifting apparatus 47 and the self-propelling operation of the truck body 46, regardless of any step height which may exist between the stand-by position A and the cargo holding stage 42.

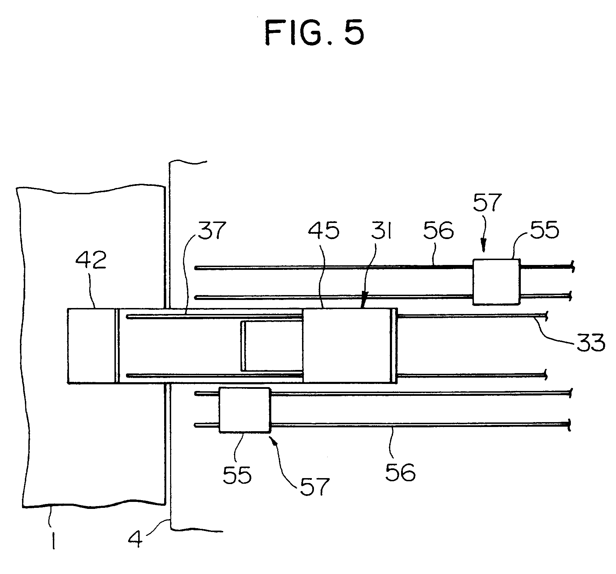

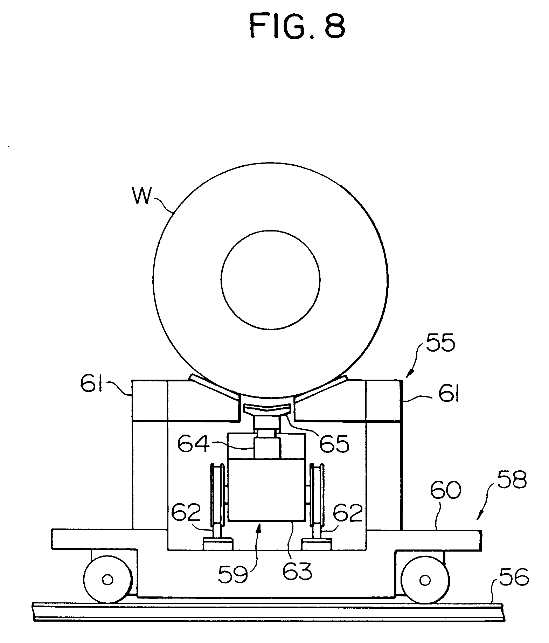

When the main frame 32 having the inner skid 38 is opened at its left and right sides, a single, common cargo transfer apparatus 31 can be used for sub-trucks (denoted by 59 in Fig. 8) of a pair of conveyor apparatuses (denoted by 57 in Fig. 5), so that the cargo transfer apparatus 31 can operate almost continuously without any waiting time.

When the cargo holding stage 42 is cantilevered from the front lower end of the liftable support 41, the holding stage 42 is so positioned as to project forwardly from the main frame 32, thus facilitating delivery of the cargo to and from the holding stage 42 performed by the shore crane 52.

A preferred embodiment of the cargo transfer apparatus of the present invention, applied to loading/unloading of coils of steel sheets as the cargo, will be described by way of example with reference to the accompanying drawings.

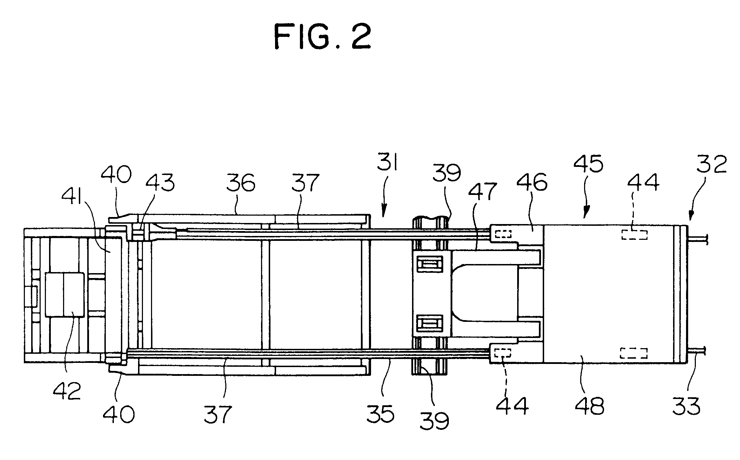

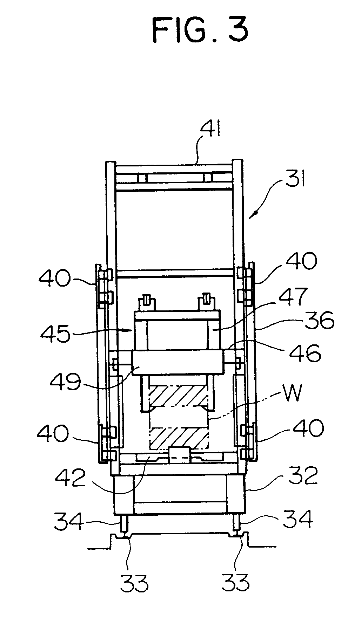

Figs. 1 to 3 show an embodiment of the cargo transfer apparatus in accordance with the present invention. More specifically, Figs. 1, 2 and 3 respectively show the whole cargo transfer apparatus in side elevation, plan and front elevation, respectively.

The cargo transfer apparatus, generally denoted by 31, has a main frame 32 which includes a main part 35 which runs along rails 33 laid perpendicularly with respect to a wharf side 4 by means of wheels 34 adapted to roll on these rails, and a forward portion 36 which is formed integrally with the main part 35 and which extends forwardly from the front end of the main part 35. Shifter rails 37 are laid on the main frame 32 over the entire length of the latter.

A gate-type inner skid 38 forming a cargo receiving station is disposed in the main part 35 at a position which is slightly offset forwardly from the center of the main part 35. The main part 35 has lateral openings through which the inner skid 38 is exposed. Approach rails 39 are laid on the floor of the main part 35 beneath the inner skid 38 over the entire breadth of the main part 35.

The forward portion 36 is constructed so as to rise from the front end of the main part 35 so that the front end of the forward portion 36 is of considerable height.

Slide guides 40 are provided on the upper and lower ends of the front face of the forward portion 36 both at the left and right ends of the forward portion 36. These slide guides 40 slidably support a generally rectangular parallelepiped frame-like liftable support 41 in such a manner as to embrace the liftable support 41 at left and right sides of the latter.

A cargo holding or hand-over stage 42 serving as a coil-receiving stage is cantilevered by the lower end of the front face of the liftable support 41.

A plurality of lock holes are formed in the surfaces of the longitudinal vertical beams of the liftable support 41 facing the front end of the forward portion 36 at a predetermined vertical pitch. Lock pins 43 are provided on the front side of the forward portion 36 for engagement with selected lock holes so as to lock the liftable support 41 at a preselected height with respect to the forward portion 36.

A self-propelled shifter 45 has a truck body 46 provided at its bottom with wheels 44 adapted to roll along the shifter rails 37. The shifter 45 further has a lifter 47 which is provided on the front end of the truck body 46 so as to extend forwardly therefrom, and a driving unit 48 provided on a rear part of the truck body 46.

The driving unit 48 includes a unit for driving the lifter 47, a unit for propelling the truck body 46 and a control unit for controlling these units.

The lifter 47 has a carrying device 49 which is in this embodiment of an expandable tongue type. The carrying device 49 is suspended from the end of a wire or cable 50 which is adapted to be wound and unwound by the driving unit 48.

The shifter 45 is movable between a retracted limit position where the carrying device 49 is positioned immediately above the inner skid 38, i.e., at the wharf-side stand-by position A and an advanced limit position where the carrying device 49 is positioned directly above the coil mounting portion of the holding stage 42.

The level of the cargo holding or hand-over stage 42 is adjusted by moving the integral structure up and down including the holding stage 42 and the liftable support 41 by means of the lifter 47 of the shifter 45 when moved to its the advanced limit position, and, when the holding stage 42 has reached a desired level, bringing the lock pins into the lock holes, whereby the holding stage 42 is fixed at the desired level.

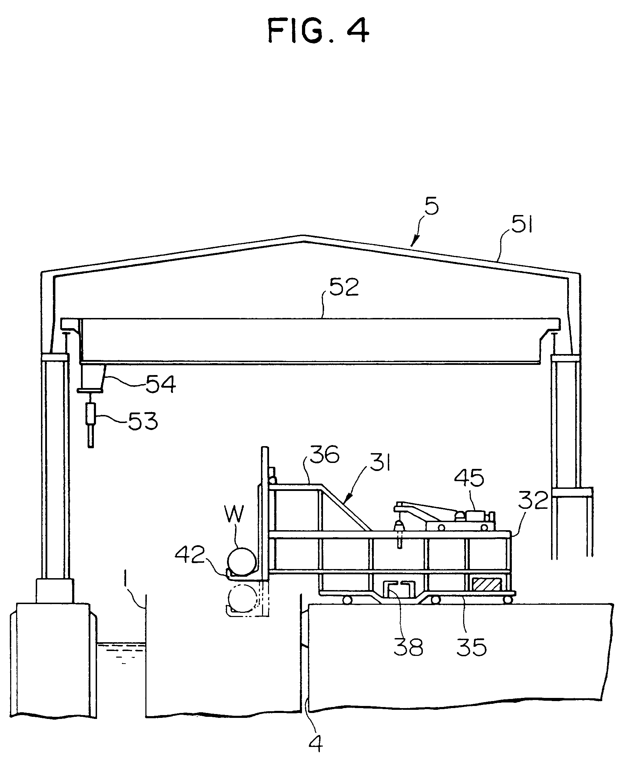

Figs. 4 and 5 illustrate the cargo transfer apparatus 31 of the present invention installed on an all-weather berth 5. The all-weather berth 5 includes a hall 51 built-up on the wharf 4.

A shore crane 52 serving as the cargo handling apparatus is provided near the ceiling of the hall 51. The shore crane 52 extends in the breadthwise direction of a ship 1 moored at the wharf 4, the shore crane being disposed at a level high enough to clear the mast tops of the ship 1 when the latter enters and exits the berth 5. The shore crane 52 is adapted to run along the wharf 4, i.e., in the longitudinal direction of the ship 1.

The shore crane 52 may have a construction similar to that of conventional overhead cranes. Namely, the shore crane 52 may be of the type which has a beam as the main part, a hoist 54 capable of running along the beam, and a carrying device 53 such as of the expandable tongue type suspended from the hoist 54.

When the cargo transfer apparatus 31 has been moved to the fully advanced position, the cargo holding or hand-over stage 42 can be positioned above a hatch of the ship 1. It is thus possible to position the cargo holding or hand-over stage 42 within the hold as shown in Fig. 4 by lowering the same.

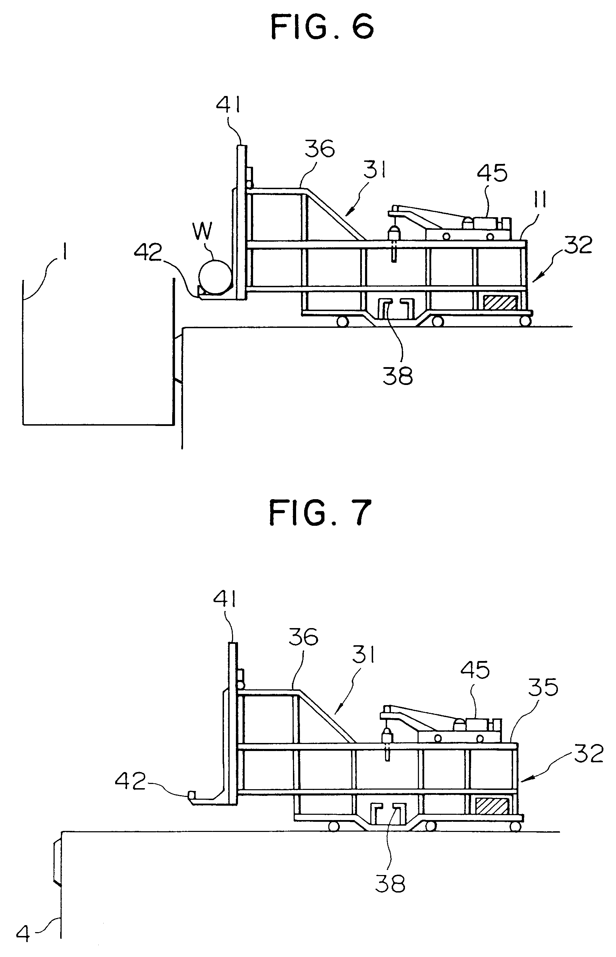

If there is a risk that the forward portion 36 and the holding stage 42 may interfere with the hatch top of the ship 1 due to, for example, tide condition or trim of the ship 1, the cargo transfer apparatus 31 may be retracted to a position where the holding stage 42 is located outside but very close to the ship's side, as shown in Fig. 6.

The cargo transfer apparatus 31 may be stationed at the fully retracted waiting position when not in use, as illustrated in Fig. 7.

A conveyor apparatus 57 having a carrier truck 55 and a shore track or pathway 56 is disposed at each lateral side of the cargo transfer apparatus 31 in close proximity of the latter.

The shore pathways 56 extend in parallel with the shifter rails 33 so that the carrier trucks 55 can be placed in juxtaposition with the respective lateral sides of the inner skid 38 in the cargo transfer apparatus 31.

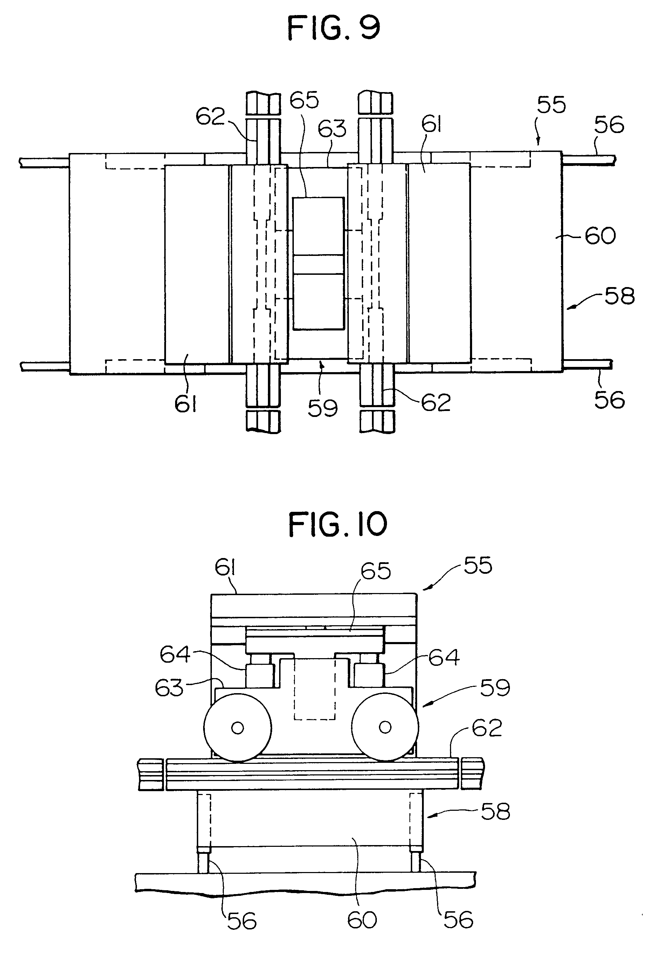

As shown in Figs. 8 to 10, the carrier truck 55 has a main truck 58 and a sub-truck 59.

A pair of supports 61 arranged in a gate-like form are provided on the frame 60 of the main truck 58 so as to support a coil W of the cargo. Sub-truck rails 62 are laid on the truck frame 60 so as to extend in the direction perpendicular to the shore pathway 56, and the sub-truck 59 is mounted so as to run along the sub-truck rails 62. The sub-truck 59 has a frame 63 which carries a liftable support 65 which is liftable by means of a pair of plungers 64.

The pair of supports 61 mentioned above are arranged in the gate-like form so as to leave therebetween a space through which the liftable support 65 on the sub-truck 59 is projectable and retractable, up and down.

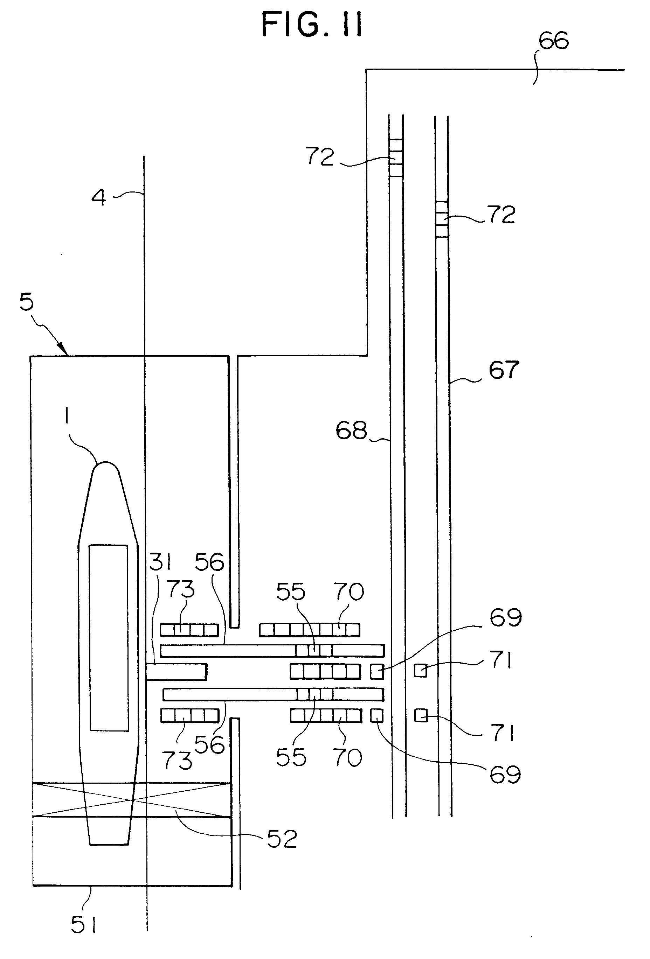

Fig. 11 illustrates in plan a general arrangement including the cargo transfer apparatus of the present invention situated in an all-weather berth 5 which includes a wharf warehouse 66 in which the coils W are stored.

A pair of parallel conveyor pathways 67, 68 are laid on the floor of the warehouse 66. The aforesaid shore pathways 56 are laid perpendicularly to the conveyor pathways 67, 68 such that one end of each pathway 56 is located near the pathway 68 in the warehouse 66.

A pair of cross-skids 69 are disposed in the vicinity of the shore-side end of the shore pathway 56 and the wharf-side conveyor pathway 68.

Three groups of delivery skids 70, each having a plurality of skids, are arranged near the shore-side ends of the shore pathway 56 so as to deliver and receive coils to and from the shore trucks 55.

A connector skid 71 is disposed between the warehouse pathway 67, 68 at a position opposing the cross-skids 69. The connector skid 71 serves as a relay skid through which coils W can be shifted from conveyor trucks 72 on the land-side conveyor pathway 67 to the conveyor trucks 72 on the wharf-side conveyor pathway 68.

Transfer of the coils from the trucks 72 on the wharf-side pathway 68 to the shore trucks 55 on the shore pathway 56 is conducted via the delivery skids 70, directly through the cross-skids 69 or by means of a crane installed in the warehouse 66.

A plurality of rows of shore skids 73 are arranged in the vicinity of the wharf-side ends of the shore pathways 56. These shore skids 73 provide a pool or buffer function to enable adjustment of the delivery of the coils W from the shore trucks 55 to the cargo transfer apparatus 31 of the invention.

Whilst being conveyed along the shore pathway 56, the coil W is carried by the main truck 58 of the shore truck 55.

Similarly, conveying of the coils W along the conveyor pathways 67, 68 in the warehouse is conducted while the coils W are carried by the main trucks 58 of the conveyor trucks 72.

In contrast, transfer of the coils to and from the inner skid 38 of the cargo transfer apparatus 31, shore skids 73, cross-skids 69 and the connector skids 71 is conducted by supporting the coils W on the sub-trucks 59.

A description will now be given of the constructions of the cross-skid 69, delivery skids 70 and the connector skids 71.

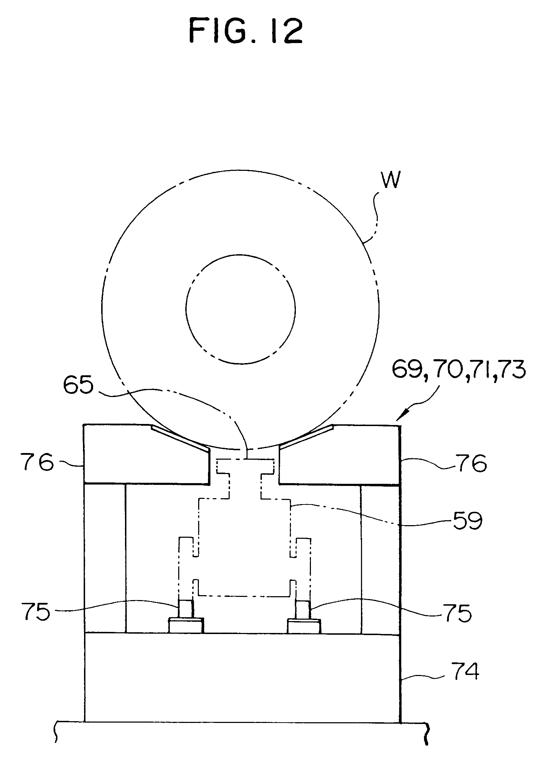

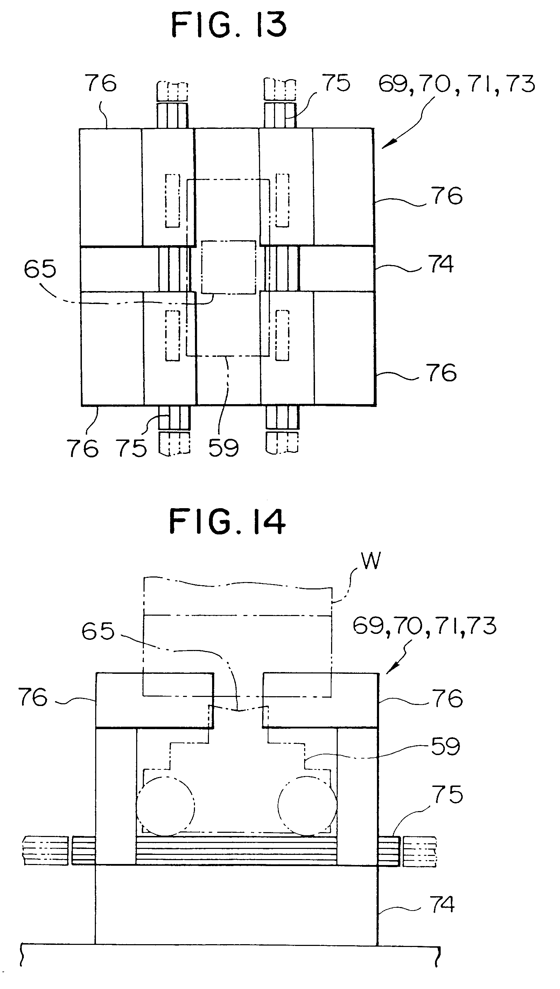

As shown in Figs. 12 to 14, sub-truck rails 75 are laid on the upper surface of a base 74 which is provided on the floor of the warehouse or on the wharf 4, so as to extend along the center of the base 74. A pair of saddle members 76 arranged in a saddle-like form are provided on the upper surface of the base 74 such that these saddle members 76 oppose each other leaving therebetween a gap which allows the liftable support 65 of the sub-truck 59 to move up and down therethrough.

Each saddle member 76 is split into two parts, in order to facilitate fabrication and installation.

It is necessary that the sub-truck rails 75 on the connector skid 71 extend over the whole length of the skid 71. In other skids 69, 70 and 73, however, the sub-truck rails 75 need not extend over the entire length of these skids.

Referring now to the cross-skid 69, each of the saddle members 76 is split into two parts, and a gap is formed between the opposing saddle members 76 so as to allow the liftable support 65 of the sub-truck 59 to move up and down therethrough. The cross-skid 69 has two orthogonal pathways crossing at a right angle to each other. The portion of the floor of the cross-skid 69 carrying the crossing portions of these passages is rotatable through 90° by a turner.

The inner skid 38 of the cargo transfer apparatus 31 has a construction similar to that of the connector skid 71. Namely, the approach rails 39 which provide a pathway for the sub-truck 59 extend over the entire length of the main part 35 so that the sub-truck 59 of the shore truck 55 carrying a coil W can smoothly move into and out of the inner skid 38.

A description will now be given of an example of the cargo handling operation performed by the aforesaid shore crane 52 with specific reference to Figs. 15 to 17.

The cargo transfer apparatus 31 is moved along the rails 33 and is stopped and stationed at a position convenient for loading or unloading of cargo into or from the ship 1 moored at the wharf 4, and the cargo holding or hand-over stage 42 is adjusted to a level which is convenient for the cargo loading or unloading.

The position information, including the position of the holding stage 42 in the direction parallel to the rails 33, in the direction perpendicular to the rails 33 and in the heightwise direction, is entered to the operation control section for controlling the shore crane 52.

Then, a coil W on the delivery skid 70 is moved to the stand-by position A in the main frame 32 of the cargo transfer apparatus 31, by means of the shore truck 55, and the coil W placed at the stand-by position A is further shifted onto the holding stage 42 by the operation of the shifter 45 of the cargo transfer apparatus 31.

After the coil W is placed on the holding stage 42, the shore crane 52, which has been stationed with its carrying device 53 elevated to a level high enough to clear the hatch tops of the ship 1, starts to operate in accordance with the entered position information concerning the position of the holding stage 42, so as to automatically perform a series of operations including bringing the hoist 54 to a position directly above the holding stage 42, retaining the coil W on the holding stage 42 with the carrying carrying device 53, and hoisting of the carrying device 53 to such a level that enables the coil W to clear the hatch tops of the ship 1. After the coil W has been hoisted to the safe level, the operation mode of the shore crane 52 is switched from automatic mode to manual mode.

The shore crane 52 suspending the coil W then operates under manual control so as to bring the coil W from a position directly above the holding stage 42 to a position above a hatch of the ship 1, and then operates so as to lower the carrying device 53 thereby placing the coil W at a predetermined stowage position in the hold. The carrying device 53 is then hoisted to a safe level and, thereafter, the operation of the shore crane 52 is switched from manual mode to automatic mode so as to automatically return the carrying device 53 to the stand-by position to prepare for the next cargo handing operation.

The described automatic operation of the shore crane 52 for automatically returning the crane 52 to the constant stand-by or waiting position permits a reduction about 10 to 30 % in the time required for the handling of cargo, in case of a standard cargo ship of 1000 dead weight tons, as compared with the conventional system in which pieces of cargo are directly conveyed by the shore crane 52 into the ship from a plurality of shore skids 3 arranged on the wharf 4. The docking time also is remarkably shortened, accordingly.

In the described conventional system, at least two workers must be employed, one on the wharf 4 for bringing the carrying device into engagement with the coil and one on board the ship 1 for guiding the movement of the crane 52. In contrast, according to the invention, only one on-board worker suffices by virtue of the automatic control of the shore crane 52 for resetting the crane 52 to the stand-by position.

As will be understood from the foregoing description, the present invention offers the following advantages.
(1) Unlike the conventional system shown in Fig. 20 in which pieces of cargo are exchanged directly between a shore truck 17 and the hand-over apparatus 8, the cargo transfer apparatus of the invention does not require strict control of the stop position of the conveyor apparatus (shore trucks 55) with respect to the shore crane 52, by virtue of the fact that the delivery of the cargo is conducted via the cargo holding or hand-over stage 42 which is fixed at a predetermined position. The control section for controlling the conveyor apparatus, i.e., shore trucks 55, therefore can have a simplified construction, and the operation of such apparatus also is simplified and facilitated.
(2) According to the invention, the loading/unloading operation is conducted by using the holding stage 42 as a relay station, i.e., by temporarily placing the cargo on the holding stage 42, such that the delivery of the cargo between the holding stage 42 and the shore trucks 55 is performed by the cargo transfer apparatus 31, while the delivery of the cargo between the holding stage 42 and the ship 1 is conducted by the shore crane 52. Thus, the holding stage 42 provides an intermediate buffer function in the cargo loading/unloading operation.
   Consequently, both the shore-side conveyor apparatuses such as the shore trucks 55 and the ship-side apparatus such as the shore crane 52 can freely operate without being restricted by the operational state of the cargo loading/unloading operation, thus achieving a high efficiency of the cargo handling work.
(3) The amount of hoisting up and down of the cargo by the shore crane is greatly reduced, which remarkably shortens the cycle time of cargo handling work performed by the shore crane 52, whereby the efficiency of the cargo handling operation by the shore crane is greatly increased.
(4) According to the cargo transfer apparatus 31 of the present invention, the shore crane 52 returns to a predetermined position after loading the cargo in the hatch of the ship, in each cycle of its cargo handling operation. Therefore, returning of the shore crane 52 to the predetermined position, as well as delivery of the cargo to and from the cargo holding or hand-over stage 42, can be performed automatically, thus facilitating the operation and control of the shore crane 52. This contributes to a further improvement in the efficiency of the cargo handling work performed by the shore crane 52.
(5) The cargo transfer apparatus 31 of the present invention is installed on the wharf, without requiring any specific work or equipment for the installation. In addition, it is not necessary to build up or dismantle the cargo transfer apparatus 31 before and after each cargo loading/unloading operation. Thus, the cargo transfer apparatus of the present invention can easily be dealt with and can be easily combined with existing shore cargo handling system.
(6) The semi-automatic operation of the shore crane 52 for automatically returning the same to a predetermined position offers a remarkable reduction in the mooring time, and eliminates the necessity for any worker on the wharf. Consequently, the cost incurred for the cargo loading/unloading work can greatly be reduced.

## Claims

1. A cargo transfer apparatus (31) for loading and unloading cargo into or from a ship, wherein the apparatus comprises a main portion (32), adapted to be disposed on a wharf-side (4), having a forward portion (36) integral with the main portion (32) and including at the leading end thereof a cargo holding stage (42) adapted to be disposed in, or in proximity to, the ships hold, a cargo receiving station (38) adapted to receive cargo (W) from at least one conveyor apparatus (57) and a self propelled shifting means (45) operable to shift cargo (W) from the cargo receiving station (38) to the cargo holding stage (42), wherein the shifting means (45) comprises a truck (46) adapted to run on the main frame (32) which truck (46) includes a lifting apparatus (47) and a carrying apparatus (49) operable to lift and lower the cargo (W) and to carry the same during transfer between the cargo receiving station (38) and the cargo holding stage (42).

2. Apparatus as claimed in claim 1, wherein the cargo receiving station (38) comprises an inner skid (38) which skid disposed in the main portion (32), is open at its respective lateral sides and has a gate-like construction thereby to receive cargo (W) directly from conveyor apparatus (57) disposed at either or both of said sides.

3. Apparatus as claimed in claim 1 or 2, wherein the forward portion (36) of the main portion (32) includes height adjustment means (40,41,43) operable to adjust the height of the cargo holding stage (42).

4. Apparatus as claimed in claim 3, wherein the height adjustment means includes slide guides (40) disposed on the leading end of the forward portion (36) of the main portion (32), a liftable support frame (41) vertically movably retained on the slide guides (40) and adapted to allow passage therethrough of the cargo (W) and the lifting apparatus (47) and carrying apparatus (49) of the truck (46) and means (43) for retaining the frame (41) in a desired position on the slide guides (40).

5. Apparatus as claimed in claim 4, wherein the cargo holding stage (42) is retained in cantilevered manner on a lower part of the support frame (41).

## Patentansprüche

1. Frachtüberführungsvorrichtung (31) zum Beladen und Entladen eines Schiffes mit Fracht, wobei die Vorrichtung einen Hauptteil (32) aufweist, der geeignet ist, auf einer Kaiseite (4) vorgesehen zu sein, der einen vorderen Teil (36) aufweist, der integraler Bestandteil des Hauptteils (32) ist und an seinem Führungsende eine Frachthaltestufe (42) aufweist, die geeignet ist, in oder in der Nähe des Frachtraums des Schiffes vorgesehen zu sein, eine Frachtaufnahmestation (38), die geeignet ist, Fracht (W) von wenigstens einer Fördervorrichtung (57) aufzunehmen, und eine Verschiebevorrichtung (45) mit Eigenantrieb, die betreibbar ist, um Fracht (W) von der Frachtaufnahmestation (38) zur Frachthaltestufe (42) zu verschieben, wobei die Verschiebevorrichtung (45) einen Wagen (46) aufweist, der geeignet ist, auf dem Hauptgestell (32) zu laufen, und der eine Hebevorrichtung (47) und eine Tragevorrichtung (49) aufweist, die betreibbar ist, um die Fracht (W) zu heben und zu senken und diese während des Transfers zwischen der Frachtaufnahmestation (38) und der Frachthaltestufe (42) zu tragen.

2. Vorrichtung nach Anspruch 1, wobei die Frachtaufnahmestation (38) einen inneren Schlepper (38) aufweist, der in dem Hauptteil (32) angeordnet ist, an den jeweiligen lateralen Seiten offen ist und einen torartigen Aufbau aufweist, wodurch Fracht (W) direkt von der an einer oder beiden Seiten vorgesehenen Fördervorrichtung (57) aufgenommen werden kann.

3. Vorrichtung nach Anspruch 1 oder 2, wobei der vordere Teil (36) des Hauptteils (32) eine Höheneinstellvorrichtung (40, 41, 43) aufweist, die betreibbar ist, um die Höhe der Frachthaltestufe (42) einzustellen.

4. Vorrichtung nach Anspruch 3, wobei die Hoheneinstellvorrichtung aufweist: Führungsschienen (40), die am Führungsende des vorderen Teils (36) des Hauptteils (32) vorgesehen sind, ein hebbares Stützgestell (41), das vertikal bewegbar auf den Führungsschienen (40) gehalten wird und geeignet ist, das Passieren der Fracht (W) und der Hebevorrichtung (49) des Wagens (46) zu ermöglichen, und eine Vorrichtung (43), um das Gestell (41) in einer gewünschten Position auf den Führungsschienen (40) zu halten.

5. Vorrichtung nach Anspruch 4, wobei die Frachthaltestufe (42) in einer einseitig eingespannten Weise auf dem unteren Teil des Tragegestells (41) gehalten wird.

## Revendications

1. Appareil (31) de transfert de cargaison pour charger une cargaison dans un navire et pour l'en décharger, l'appareil comprenant: une partie principale (32) adaptée pour être disposée sur un côté de quai (4) et comportant une partie avant (36) faisant corps avec la partie principale (32) et comprenant à son extrémité avant un plateau (42) de support de cargaison, adapté pour être disposé dans la cale du navire , ou a proximité de celle-ci, un poste (38) de réception de cargaison adapté pour recevoir une cargaison (W) provenant d'au moins un appareil convoyeur (57) et un moyen de déplacement autopropulsé (45) pouvant fonctionner de manière à déplacer une cargaison (W) depuis le poste de réception de cargaison (38) jusqu'au plateau (42) de support de cargaison, ce moyen de déplacement (45) comprenant un chariot (46) adapté pour se circuler sur le bâti principal (32), ce chariot (46) comprenant un appareil de levage (47) et un appareil porteur (49) pouvant fonctionner de manière à soulever et abaisser la cargaison (W) et porter celle-ci pendant son transfert entre le poste (38) de réception de cargaison et le plateau (42) de support de cargaison.

2. Appareil selon la revendication 1, dans lequel le poste (38) de réception de cargaison comprend un berceau intérieur (38), lequel berceau, disposé dans la partie principale (32), est ouvert à ses côtés latéraux respectifs et présente une structure analogue à une porte de manière à recevoir ainsi la cargaison (W) directement de l'appareil convoyeur (57) disposé à l'un ou aux deux côtés précités.

3. Appareil selon la revendication 1 ou 2, dans lequel la partie avant (36) de la partie principale (32) comprend un moyen de réglage de hauteur (40, 41, 43) pouvant fonctionner de manière à régler la hauteur du plateau (42) de support de cargaison.

4. Appareil selon la revendication 3, dans lequel le moyen de réglage de hauteur comprend des glissières (40) disposées sur l'extrémité avant de la partie avant (36) de la partie principale (32), un bâti de support (41) pouvant être soulevé et retenu de façon mobile verticalement sur les glissières (40) et adapté pour permettre le passage traversant de la cargaison (W) et de l'appareil de levage (47) ainsi que de l'appareil porteur (49) du chariot (46) et d'un moyen (43) servant à maintenir le bâti (41) dans une position voulue sur les glissières (40).

5. Appareil selon la revendication 4, dans lequel le plateau (42) de support de cargaison est maintenu en porte-à-faux sur une partie inférieure du bâti de support (41).
